(19) Europäisches Patentamt
European Patent Office
Office européen des brevets

(11) Publication number: **0 113 112 B1**

(12) # EUROPEAN PATENT SPECIFICATION

(45) Date of publication of patent specification: **23.06.93**

(51) Int. Cl.5: **C08G 65/40**, C08G 75/23

(21) Application number: **83113065.3**

(22) Date of filing: **23.12.83**

The file contains technical information submitted after the application was filed and not included in this specification

(54) **Use of an aromatic amorphous thermoplastic polymer.**

(30) Priority: **23.12.82 US 452454**

(43) Date of publication of application:
**11.07.84 Bulletin 84/28**

(45) Publication of the grant of the patent:
**23.06.93 Bulletin 93/25**

(84) Designated Contracting States:
**AT BE CH DE FR GB IT LI LU NL SE**

(56) References cited:

| | |
|---|---|
| **EP-A- 47 999** | **EP-A- 0 000 361** |
| **DE-C- 1 545 106** | **US-A- 3 647 751** |
| **US-A- 4 108 926** | **US-A- 4 175 175** |

**Mohanty, D.K. et al., American Chemical Society, Division of Polymer Chemistry. vol. 23 (1), March 1982, pages 284 - 286**

**"Kunststoff-Lexikon", K. Stoeckhert ed., 1981, Hanser, München, pages 398/399**

**H.G. Elias, "Neue polymere Werkstoffe", 1975, Hanser, München, pages 106-110**

(73) Proprietor: **AMOCO CORPORATION**
**200 East Randolph Drive P.O. Box 5910-A**
**Chicago Illinois 60680(US)**

(72) Inventor: **Clendinning, Robert Andrew**
**48 Crest Road**
**New Providence N.J.(US)**
Inventor: **Maresca, Louis Michael**
**RD Nol, Box: 139A Riverview Terrace**
**Belle Mead N.J,(US)**
Inventor: **Matzner, Markus**
**23 Marshall Drive**
**Edison N.J.(US)**
Inventor: **Schwab, Thomas Harry**
**1 Petunia Drive**
**North Brunswick N.J.(US)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 113 112 B1

Rank Xerox (UK) Business Services
(3.10/3.6/3.3.1)

## Description

BACKGROUND OF THE INVENTION

This invention is directed to the use of an amorphous thermoplastic polymer containing sulfone groups.

Polyarylene polyethers are described in, for example, U.S. Patent 4,175,175 (ex 1 and 14). This patent describes a polymer which has the following structure:

(A) 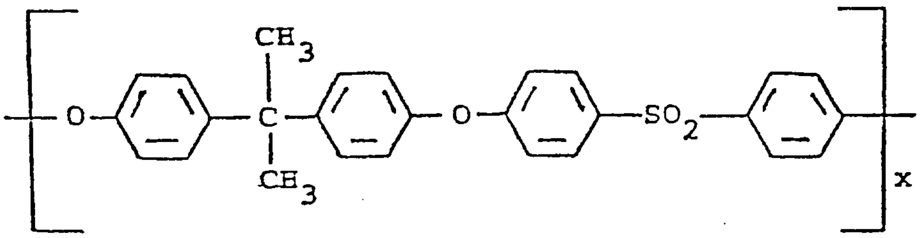

These polymers are commercially available and is a tough, rigid, high strength thermoplsstic which maintains its properties over a wide temperature range from -150°F to above 300°F. Polymer (A) has a good combination of mechanical properties and excellent electrical properties. Said polymer is highly resistant to mineral acids, alkali and salt solutions but will be attacked by environments such as polar organic solvents. Thus, there is a need to improve the environmental resistance, particularly the environmental stress crack resistance of Polymer (A) so that it can be used in applications where it will be exposed to an aggressive solvent environment.

Attempts have been made to develop polymers which have the good properties of polymer (A) and additionally, improved environmental stress crack resistance.

The following polymer (B):

(B) 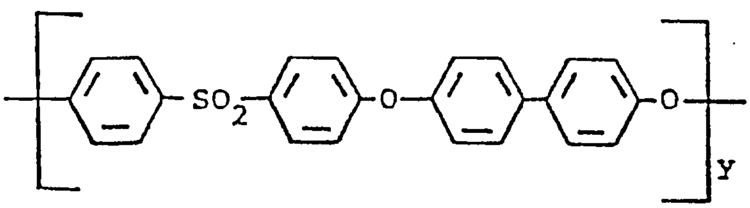

has a good balance of mechanical properties, and possesses higher notched impact strength and heat deflection temperature than polymer (A). Additionally, polymer (B) has improved stress crack resistance. However, polymer (B) is prepared from 4,4'-dichlorodiphenyl sulfone and 4,4'-biphenol. The 4,4'-biphenol is difficult and costly to prepare and does not readily lend itself to commercialization.

In the US-A-36 47 751 thermoplastic resins with the recurring units of certain aryl ether sulphones are described, which can be used as resins, lacques or in molded articles when, as it is mentioned, high temperature resistance and advantageous mechanical properties are of importance. According to one example of this patent specification, a special poly-arylether sulphone is prepared by first forming the disodium salt of 2,2-bis(4-hydroxyphenyl)-propane from the corresponding bis-phenol compound and sodium hydroxyd in toluene removing all the water during the reaction by azeotropic distillation. Then the phenolate is reacted with an equimolecular amount of 4,4'-bis(4-chlorophenyl-sulphone)-diphenyl-ether which is a rather complex and expensive compound. By this process a polymer with the recurring units

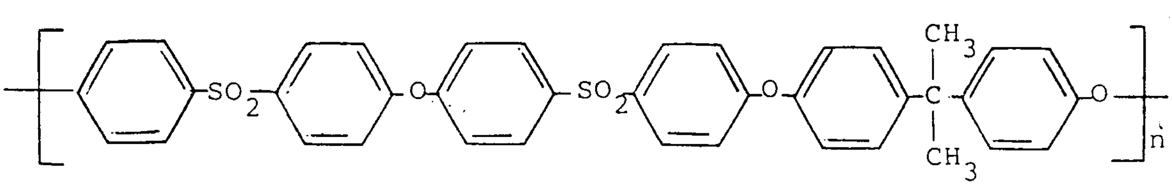

is obtained.

Furthermore in the publication "Papers presented at the Las Vegas Meeting" American Chemical Society, Division of Polymer Chemistry Vol 23, page 284-286 a copolymer containing the units of bisphenol and bisphenol A in a ratio of 3:1 has been described.

Accordingly, a need still exists for a polymer which has the good combination of mechanical properties of polymer (A) and improved environmental stress crack resistance.

A novel class of amorphous thermoplastic terpolymers has been discovered which can be easily prepared are inexpensive and thus lend themselves to commercialization. They possess an excellent combination of mechanical properties. Additionally, these novel terpolymers display high notched izod impact values, high heat distortion temperatures and have excellent environmental stress crack resistance.

## THE INVENTION

This invention is directed to the use of an amorphous thermoplastic polymers. Containing units of the formula

(I) 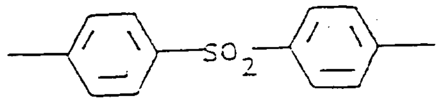

and

(II) 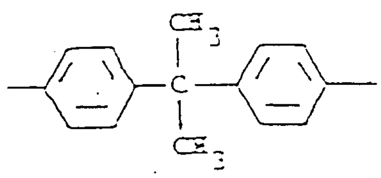

said units (I) and (II) being attached to each other by an -O- bond;

the latter in an amount of up to 10 mole percent based on the total amount of units(I) and units(II) for the production of molded articles.

The polymers may be random or may have an ordered structure.

The polymers to be used in this invention have a reduced viscosity of from about 0.4 to greater than about 2.5, as measured in N-methylpyrolidone, or other suitable solvent at 25°C.

The polymers to be used in this invention are prepared by contacting substantially equimolar amounts of a mixture of bisphenol S and bisphenol A and 4,4-dichlorophenylsulfone with from about 0.5 to about 1.0 mole of an alkali metal carbonate per mole of hydroxyl group in a solvent mixture comprising a solvent which forms an azeotrope with water in order to maintain the reaction medium at substantially anhydrous conditions during the polymerization.

The temperature of the reaction mixture is kept at from about 120 to about 180°C, for about 1 to about 5 hours and then raised and kept at from about 200 to about 250°C, preferably from about 210 to about 230°C, for about 1 to 10 hours.

The reaction is carried out in an inert atmosphere, e.g., nitrogen, at atmospheric pressure, although higher or lower pressures may also be used.

The polymer is then recovered by conventional techniques such as coagulation and solvent evaporation.

The solvent mixture comprises a solvent which forms an azeotrope with water and a polar aprotic solvent. The solvent which forms an azeotrope with water includes an aromatic hydrocarbon such as benzene, toluene, xylene, ethylbenzene and chlorobenzene.

The polar aprotic solvents employed are those generally known in the art for the manufacture of polyarylether sulfones and include sulfur containing solvents such as those of the formula:

$R_1-S(O)_b-R_1$

in which each $R_1$ represents a monovalent lower hydrocarbon group free of aliphatic unsaturation, which preferably contains less than about 8 carbon atoms or when connected together represents a divalent

alkylene group with b being an integer from 1 to 2 inclusive. Thus, in all of these solvents all oxygens and two carbon atoms are bonded to the sulfur atom. Contemplated are such solvents as those having the formula:

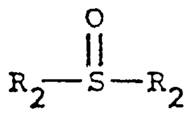

and

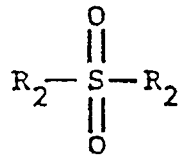

where the $R_2$ groups are independently lower alkyl, such as methyl, ethyl, propyl and butyl groups, and aryl groups such as phenyl and alkylphenyl groups such as the tolyl group, as well as those where the $R_2$ groups are inter-connected as in a divalent alkylene bridge such as:

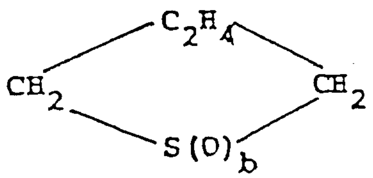

in tetrahydrothiophene oxides and dioxides. Specifically, these solvents include dimethylsulfoxide, dimethylsulfone, diphenylsulfone, diethylsulfoxide, diethylsulfone, diisopropylsulfone, tetrahydrothiophene 1,1-dioxide (commonly called tetramethylene sulfone or sulfolane) and tetrahydrothiophene-1 monoxide.

Additionally, nitrogen containing solvents may be used. These include dimethyl acetamide, dimethyl formamide and N-methylpyrolidone.

The azeotrope forming solvent and polar aprotic solvent are used in a weight ratio of from about 10:1 to about 1:1, preferably from about 7:1 to about 5:1.

In the reaction, the hydroxy containing compound is slowly converted, in situ, to the alkali salt thereof by reacting with the alkali metal carbonate. The alkali metal carbonate is preferably potassium carbonate. Mixtures of carbonates such as potassium and sodium carbonate may also be used.

Water is continuously removed from the reaction mass as an azeotrope with the azeotrope forming solvent so that substantially anhydrous conditions are maintained during the polymerization.

It is essential that the reaction medium be maintained substantially anhydrous during the polycondensation. While amounts of water up to about one percent can be tolerated, and are somewhat beneficial when employed with fluorinated dihalobenzenoid compounds, amounts of water substantially greater than this are desirably avoided as the reaction of water with the halo and/or nitro compound leads to formation of phenolic species and only low molecular weight products are secured. Consequently, in order to secure the high polymers, the system should be substantially anhydrous, and preferably contain less than 0.5 percent by weight water during the reaction.

Preferably, after the desired molecular weight has been attained, the polymer is treated with an activated aromatic halide or an aliphatic halide such as methyl chloride or benzyl chloride. Such treatment of the polymer converts the terminal hydroxyl groups into ether groups which stabilize the polymer. The polymer so treated has good melt and oxidative stability.

The polymers to be used in this invention may be blended with one or more compatible thermoplastic polymers such as polyarylates, poly(aryl ethers), polyetherimides, polyesters, aromatic polycarbonates including polyester-carbonates, polyurethanes, polyhydroxyethers,

## Examples

In these examples, all parts and percentages are on a weight basis unless otherwise specified.

## Example 1

A four neck 2 liter round bottom flask was equipped with a mechanical stirrer, thermocouple, addition funnel, dry nitrogen inlet, and a vacuum jacketed Vigreux column with a distillation trap and a condenser.

Into the flask were charged 172.30 g. (0.60 moles) of 4,4'-dichlorodiphenyl sulfone, 120.18 g. (0.48 moles) of 4,4'-dihydroxydiphenyl sulfone, 27.39 g. (0.12 moles) of 4,4'-bisphenol A, 87.16 g. (0.618 moles) of 98% pure potassium carbonate, 195 ml. of chlorobenzene, and 514 ml. of sulfolane. The mixture was purged with nitrogen for 30 minutes and then heated to 160°C. where it was maintained for about 2.5 hours. The temperature was then raised to 220°C. and held there for about 6 hours. Methyl chloride was used to terminate the polymerization after 4.23 g. of potassium carbonate was added. The polymer was recovered by dilution with chlorobenzene, filtration to remove salts, and coagulation into methanol. It was washed with warm water and finally with methanol before drying in a vacuum oven at about 120°C. The polymer had a reduced viscosity of 0.71 as measured in N-methylpyrolidinone (0.2 g/100 ml) at 25°C. The polymer had a repeating unit of the following formula:

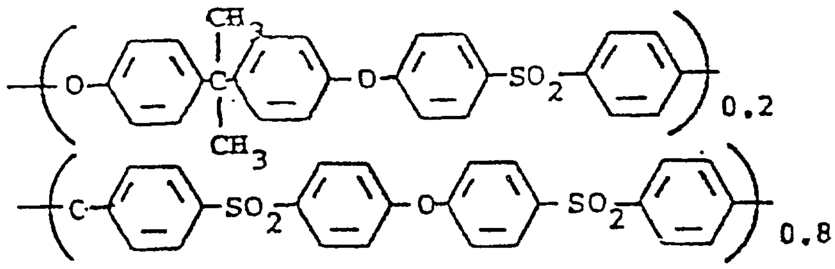

Example 2

A four neck 2 liter round bottom flask was equipped with a mechanical stirrer, thermocouple, addition funnel, dry nitrogen inlet and a vacuum jacketed Vigreux column with a distillation trap and a condenser. Into the flask were charged 172.70 g. (0.60 moles) of 4,4'-dichlorodiphenyl sulfone, 135.15 g. (0.54 moles) of 4,4'-dihydroxydiphenyl sulfone, 13,70 g. (0.06 moles) of 4,4'-bisphenol A, 85.47 g. (0.606 moles) of 98.0% pure potassium carbonate, 195 ml. of chlorobenzene, and 514 ml. of sulfolane. The mixture was purged with nitrogen for 30 minutes and then heated to 220°C, and maintained there for about 7 hours. The reaction was terminated by reaction with methyl chloride after the addition of 4.23 g. of potassium carbonate. The polymer was recovered by dilution with chlorobenzene, filtration to remove salts, and extrusion through a vented extruder to recover pelletized product. The material had a reduced viscosity of 0.53 as measured in N-methyl-pyrolidinone (0,2 g/100 ml) at 25°C. The polymer had a repeating unit of the following formula:

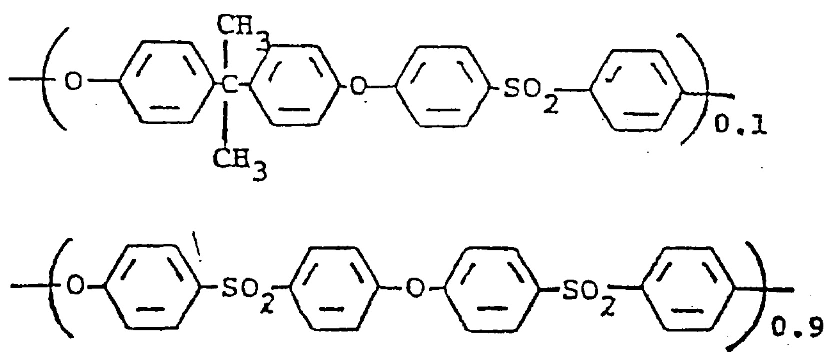

The polymer prepared in Example 1 was compression molded at about 300°C into ASTM test bars and tested for the following properties: Tensile strength and modulus according to ASTM D-638; yield strength according to ASTM D-790; elongation at break according to ASTM D-638; pendulum impact strength according to ASTM D-1822. The glass transition temperature (Tg) of the polymer was obtained by a dynamic mechanical method using a torsion pendulum as described in L. E. Nielsen, Mechanical Properties of Polymers, Van Nostrand-Reinhold, Princeton, New Jersey. Also, the reduced viscosity of the polymer is shown.

Controls A and B were also tested as described to determine their physical properties. The reduced viscosity of the Controls was measured in methylene chloride at 25°C (0.2 gm/100 ml)

Control A is a polymer of the following formula:

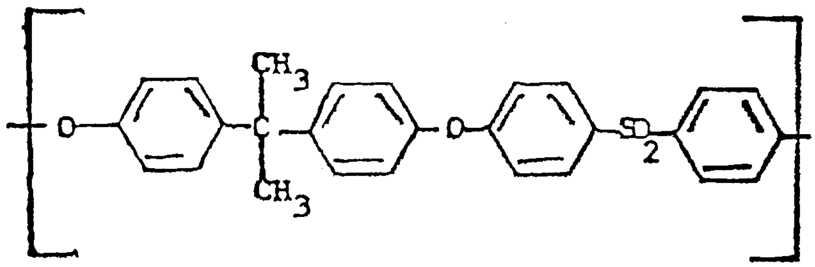

and Control B has the following formula:

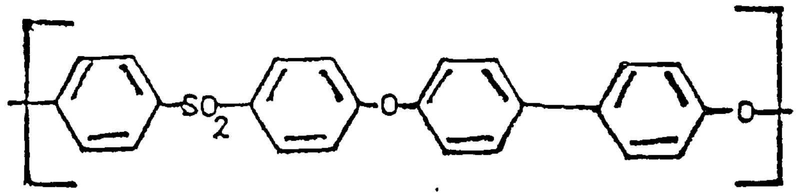

The results are shown in Table I.

TABLE I

| Example | Tensile Modulis (psi) | Tensile Strength (psi) | Yield Strength (psi) | Elongation (%) | Pendulum Impact (Ft.lbs/in.²) | Tg (°C) | Reduced Viscosity (dl/g) |
|---|---|---|---|---|---|---|---|
| Control A | 2550 MPa (370,000) | 69 MPa (10,000) | 69 MPa (10,000) | 50 | (150) 815 mJ/mm² | 185 | 0.50 |
| Control B | 2210 MPa (321,000) | 73 MPa (10,600) | 73 MPa (10,600) | 78 | (300) " 1630 | 215 | 0.55 |
| 1 | 1990 MPa (289,000) | 78 MPa (11,300) | 78 MPa (11,300) | 22 | (153) " 831 | 210 | 0.53 |

## Claims

**1.** The use of an amorphous thermoplastic polymer containing units of the formula:

(I)

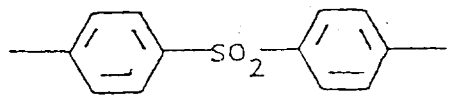

and

(II)

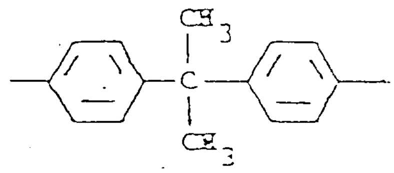

said units (I) and (II) being attached to each other by an -O- bond;

the latter in an amount of up to 10 mole percent based on the total amount of units(I) and units(II) for the production of molded articles.

## Patentansprüche

**1.** Verwendung eines amorphen thermoplastischen Polymeren, das Einheiten der Formel

(I)

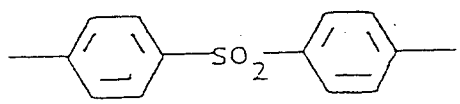

und

(II)

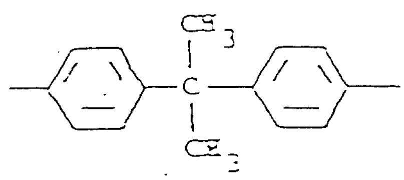

enthält,

wobei diese Einheiten (I) und (II) durch eine -O-Bindung miteinander verbunden sind,

letztere in einer Menge bis zu 10 Mol-%, bezogen auf die Gesamtmenge der Einheiten (I) und (II), zur Herstellung geformter Gegenstände.

## Revendications

**1.** Utilisation d'un polymère thermoplastique amorphe contenant des motifs de formule:

(I)

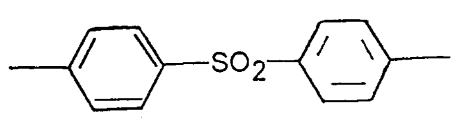

et

(II) 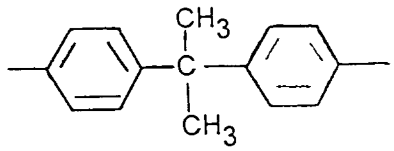

lesdits motifs (I) et (II) étant reliés l'un à l'autre par une liaison -O-;

ce dernier en une quantité allant jusqu'à 10 pourcent en moles par rapport à la quantité totale des motifs (I) et des motifs (II)
pour la production d'articles moulés.